Europäisches Patentamt

European Patent Office

Office européen des brevets

(11) Veröffentlichungsnummer: **0 491 380 A2**

# EUROPÄISCHE PATENTANMELDUNG

(21) Anmeldenummer: **91121708.1**

(22) Anmeldetag: **18.12.91**

(51) Int. Cl.5: **B29C 65/02**, //A61J1/10

(30) Priorität: **19.12.90 DE 4040687**

(43) Veröffentlichungstag der Anmeldung:
**24.06.92 Patentblatt 92/26**

(84) Benannte Vertragsstaaten:
**AT BE CH DK ES FR GB IT LI LU NL SE**

(71) Anmelder: **PAUL KIEFEL HOCHFREQUENZ-ANLAGEN GMBH
Sudetenstrasse 3-7
W-8228 Freilassing(DE)**

(72) Erfinder: **Hinterseer, Heinz
Johann-Sebastian-Bach-Strasse 4
W-8228 Freilassing(DE)**

(74) Vertreter: **Patentanwälte Leinweber & Zimmermann
Rosental 7/II Aufg.
W-8000 München 2(DE)**

(54) **Verfahren zum Einschweissen eines Einsatzes zwischen zwei Folien.**

(57) Es wird ein Verfahren zum Einschweißen eines Einsatzes (6), insbesondere eines Anschlußröhrchens in einem aus Folien (3,3') herzustellenden Kunststoffbehälter beschrieben, bei dem der Einsatz (6) zwischen die Folien (3, 3') eingefügt und diese zwischen zwei Formstücken (1, 1'), deren Gestalt an die Außenkontur des einzuschweißenden Einsatzes (6) und die sich anschließenden Nahtbereiche der Schweißnaht angepaßt ist, miteinander verschweißt werden, indem die Formstücke (1, 1') mit jeweils zugeordneten Schweißbacken (5, 5') in Kontakt gebracht und unter Druck beheizt werden, und daß die verschweißten Teile zwischen den Formstücken (1, 1') verbleibend zusammen mit diesen von den Schweißbacken (5, 5') entfernt und in eine Kühlvorrichtung überführt und dort bis zur Verfestigung der Schweißnaht gekühlt werden.

Fig.1

Die Erfindung betrifft ein Verfahren zum Einschweißen eines Einsatzes, insbesondere eines Anschlußröhrchens zwischen zwei Folien eines aus Kunststoffolie herzustellenden Behälters, insbesondere eines Flüssigkeitsbeutels.

Auf zahlreichen Gebieten, insbesondere im medizinischen Bereich zur Verwendung als Infusionsbeutel oder Blutbeutel etc., werden zur Aufnahme von Flüssigkeiten Beutel benötigt, die aus zwei ein- oder mehrschichtigen flexiblen Kunststoffolien bestehen, die an ihrem Umfang miteinander verschweißt sind, wobei die Umfangsschweißnaht an mindestens einer Stelle durch einen eingeschweißten Einsatz wie ein Schlauchstück bzw. ein Röhrchen aus thermoplastischem Kunststoff zum Füllen und/oder Entleeren des Beutels unterbrochen ist.

Beim Einschweißen des röhrenförmigen Einsatzes besteht u.a. das Problem, daß die ursprünglich plan liegenden Beutelfolien jeweils um den halben Umfang des Röhrchens herumgeführt werden müssen und dabei um einen Betrag gedehnt werden, der etwa dem halben Röhrchendurchmesser entspricht. Durch diese Dehnung der Folien entsteht eine Rückstellkraft, die die Ausbildung einer einwandfreien Verschweißung, insbesondere im Grenzbereich von Röhrchenschweißung zu Flachschweißung, erschwert.

Bisher wurden derartige Behälter fast ausschließlich im Hochfrequenz-Schweißverfahren aus HF-schweißbaren Kunststoffen, vorwiegend PVC, hergestellt.

Bei diesem bisherigen Verfahren werden in der Regel zwei gegeneinander bewegbare Formelektroden aus Messing verwendet, die der Außenkontur des einzuschweißenden Röhrchens sowie des anschließenden flachen Nahtbereiches entsprechen, sowie ein Messingstift, auf den das Röhrchen aufgesteckt ist.

Mit Hilfe einer Umschaltvorrichtung wird eine hochfrequente Wechselspannung mit einer Frequenz von 27,12 MHz einmal an eine der beiden Formelektroden angelegt, während die andere an Masse angeschlossen und der Stift mit keiner der beiden Elektroden elektrisch verbunden ist. Zum anderen wird der Stift an die Hochspannung angelegt, während beide Formelektroden an Masse angeschlossen sind.

Bei jedem Schweißvorgang liegt das im jeweiligen Schweißbereich befindliche Folienmaterial in einem hochfrequenten Wechselfeld und erwärmt sich infolge seiner dielektrischen Verluste gleichmäßig über den gesamten beaufschlagten Querschnitt. Die Elektroden bleiben kalt und ermöglichen nach Abschaltung der Schweißenergie eine Abkühlung des aufgeschmolzenen Kunststoff-Materials unter Druck, wodurch die einleitend beschriebenen Rückstellkräfte in den Beutelfolien wirkungslos gemacht werden.

Die heutigen Bestrebungen, derartige Flüssigkeitsbeutel aus PVC-freien Materialien, die nicht HF-schweißbar sind, herzustellen, schließt den Einsatz des beschriebenen, sehr zuverlässigen Hochfrequenz-Schweißverfahrens aus und erfordert Schweißverfahren, bei denen die zum Aufschmelzen der Schweißzonen nötige Wärmeenergie von außen durch die Beutelfolien zugeführt wird.

Bei einem derartigen, an sich bekannten Verfahren, bei dem zwei Folienbahnen längs einer geraden Naht verschweißt werden sollen, werden die Folienbahnen zwischen zwei einander gegenüberstehenden umlaufenden dünnen Metallbändern kontinuierlich gefördert, wobei die Metallbänder erst über geheizte und anschließend über gekühlte Backen schleifen, die kraftschlüssig gegeneinander gedrückt werden. Auf diese Weise erfolgt zeitlich nacheinander erst ein Aufschmelzen des Folienmaterials zwischen den Metallbändern, wenn diese mit den geheizten Backen in Kontakt stehen, und anschließend eine Abkühlung unter Druck, wenn sie mit den gekühlten Backen in Kontakt stehen, so daß die Voraussetzungen für eine brauchbare Schweißung erfüllt sind. Dieses Verfahren ist in der bekannten Form für das Einschweißen von Röhrchen zwischen zwei Folienlagen jedoch nicht geeignet.

Die Aufgabe der Erfindung ist es somit, ein Verfahren zum Einschweißen von Einsätzen, insbesondere Anschlußröhrchen, in die Umfangsnaht eines aus Kunststoffolie herzustellenden Behälters, insbesondere eines Flüssigkeitsbeutels, anzugeben, bei dem unter Zuführung der benötigten Wärmeenergie von außen ein zuverlässiges und dichtes Einschweißen des Einsatzes sichergestellt ist. Insbesondere soll durch das Verfahren ein zuverlässiges und dichtes Einschweißen des Einsatzes in einen aus nicht HF-schweißbaren Kunststoffolien herzustellenden Behälter angegeben werden.

Erfindungsgemäß wird diese Aufgabe durch folgende Verfahrensschritte gelöst:

Der Einsatz wird zwischen die Folien eingefügt und diese werden zwischen zwei wärmeleitfähigen Formstücken, deren Gestalt an die Außenkontur des einzuschweißenden Einsatzes und die sich anschließenden Nahtbereiche der Schweißnaht angepaßt ist, miteinander verschweißt, indem die Formstücke mit jeweils zugeordneten geheizten Schweißbacken in Kontakt gebracht und unter Druck beheizt werden,

sodann werden die verschweißten Teile zwischen den Formstücken verbleibend zusammen mit diesen von den Schweißbacken entfernt und in eine Kühlvorrichtung übergeführt und dort bis zur Verfestigung der Schweißnaht gekühlt. Die beiden Folien werden während des Schweißvorgangs solange in den Formstücken durch die Schweißbacken unter Druck beheizt, bis am Übergang des einzuschweißenden Einsatzes zu den sich anschließenden Nahtbereichen der Schweißnaht bestehende Hohlräume vollständig durch die entstehende Schmelze ausgefüllt sind. Bei den üblichen bisher verwendeten Einsätzen, insbesondere bei einem Einsatz in Form eines Röhrchens entsteht in den Bereichen, in denen die beiden Beutelfolien und der Einsatz zusammenstoßen, zu Beginn der Schweißung ein etwa dreieckiger Hohlraum, der die Ursache einer späteren Undichtigkeit des Behälters sein kann. Durch die vorstehend angegebene Maßnahme wird das Entstehen einer solchen Undichtigkeit praktisch völlig ausgeschlossen. Beim erfindungsgemäßen Verfahren ist vielmehr sichergestellt, daß die Folien sowohl während des Schweißvorgangs als auch während des Kühlvorgangs durch die beiden Formstücke gehalten und von ihnen sicher von der einen Station in die andere überführt werden können, ohne daß die Gefahr eines Lösens der Schweißverbindung besteht.

An dieser Stelle ist zu erwähnen, daß bereits ein Verfahren zum Einsetzen eines Einsatzes zwischen Folien bekannt ist (DE 32 33 983 A1), bei dem der Einsatz zwischen die Folien eingefügt und mit den Folien verschweißt wird, indem der Einsatz mit zugeordneten geheizten Schweißbacken in Kontakt gebracht und unter Druck beheizt wird. Ferner werden bei dem bekannten Verfahren die verschweißten Teile bis zur Verfestigung der Schweißnaht gekühlt. Eine Anregung, Formstücke so zwischen zwei Schweißbacken anzubringen und die Wärme derart über die Formstücke in die Folien einzubringen, daß eine dauerhafte Verbindung zwischen den Folien und dem Einsatz erhalten wird, gibt dieser Stand der Technik nicht. Auch verbleiben beim bekannten Verfahren die verschweißten Teile nicht zwischen den Formstücken, um mit den Formstücken zusammen in einer Kühlvorrichtung abgekühlt zu werden.

Gemäß einer Weiterbildung der Erfindung wird der Einsatz auf einen Stift aufgesteckt, zwischen die Folien eingefügt und das Innere des herzustellenden Behälters durch einen Kanal in dem Stift evakuiert. Durch den auch nach dem Aufheben des Druckes zwischen den Schweißbacken noch wirkenden atmosphärischen Druck entsteht auf diese Weise im Bereich der Schweißnähte eine Kraft, die die Folienbahnen gegeneinander drückt, was für das Erhalten der Festigkeit und Dichtigkeit der noch heißen Schweißnaht wichtig ist.

Von besonderem Vorteil ist es, wenn dabei das Vakuum bis zum Schluß des Kühlvorgangs und der Verfestigung der Schweißnaht beibehalten wird.

Gemäß einer Weiterbildung der Erfindung weist der einzuschweißende Einsatz eine im Querschnitt rautenähnliche Außenkontur mit einander gegenüberliegenden, spitz zulaufenden Endteilen auf, und wird so zwischen die beiden Folienteile eingefügt, daß die spitz zulaufenden Endteile des Einsatzes am Übergang zu den sich anschließenden Nahtbereichen in den Verlauf der Naht zwischen den beiden Folien übergeht. Dies ist von besonderem Vorteil, da die durch die notwendige Längenänderung der Folie beim Einschweißen des Einsatzes auftretende Rückstellkraft im wesentlichen in die Längsrichtung der Folie umgelenkt und dadurch ein Lösen der Schweißnaht weitestgehend verhindert wird.

Im folgenden wird ein Ausführungsbeispiel der Erfindung anhand der Zeichnung erläutert. Es zeigen:

Fig. 1    eine schematische Darstellung im Querschnitt durch die Folien mit dem dazwischen eingefügten Einsatz während des Verschweißens und

Fig. 2    eine schematische Darstellung in der Draufsicht auf die Folien mit eingefügtem Einsatz während des Einschweißens entsprechend der Fig.1.

In den Figuren sind zwei Schweißbacken 5, 5' dargestellt, an denen jeweils ein Formstück 1, 1' angeordnet ist. Zwischen den Formstücken 1, 1' befinden sich zwei Folien 3, 3', zwischen die ein einzuschweißender Einsatz 6 eingefügt ist, wobei der Einsatz 6 von einem Stift 4 getragen wird. Die Gestalt der beiden Formstücke 1, 1' ist an die Außenkontur des einzuschweißenden Einsatzes 6 und die sich anschließenden Nahtbereiche der Schweißnaht so angepaßt, daß die beiden Folien 3, 3' ohne Hohlraum fest und dicht an dem einzuschweißenden Einsatz 6 anliegen, wenn die beiden Formstücke 1, 1' durch die beiden Schweißbacken 5,5' unter Druck beaufschlagt zusammengepreßt werden, um den Einsatz 6 zwischen den beiden Folien 3, 3' zu verschweißen.

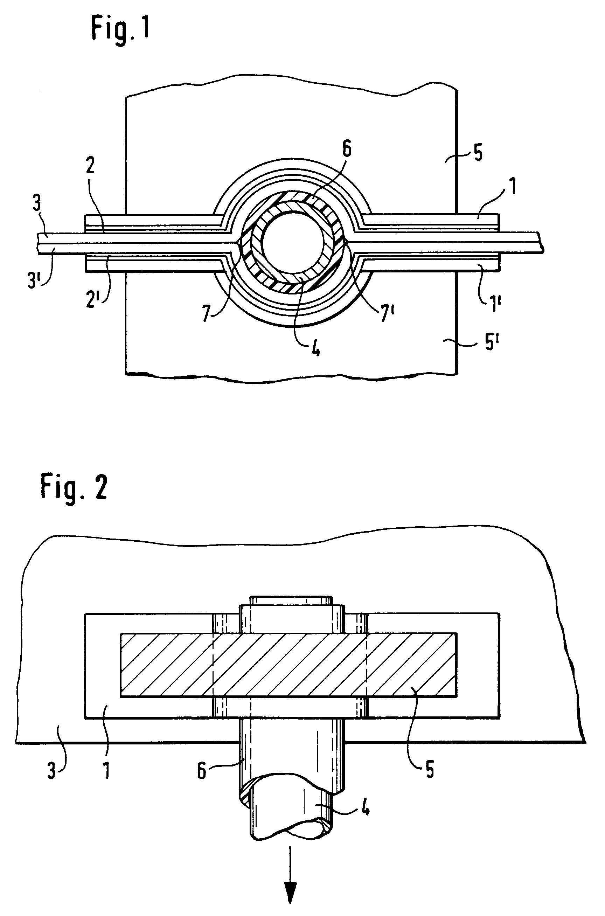

In Fig. 1 ist der Einsatz 6 in Form eines Röhrchens dargestellt, wie es insbesondere bei Flüssigkeitsbeuteln zur Verwendung im medizinischen Bereich der Fall ist. Der Einsatz 6 kann jedoch auch jede beliebige andere Form haben, solange es möglich ist, die Formstücke 1, 1' an diese entsprechend anzupassen.

Nach dem Verschweißen der Folien 3, 3' wird der Druck zwischen den beiden Schweißbacken 5, 5' aufgehoben und diese getrennt, so daß die Folien 3, 3' mit dem dazwischen eingeschweißten Einsatz 6 zusammen mit den Formstücken 1, 1', die weiterhin in Anlage an den Folien 3, 3' verbleiben, entnommen werden können. Zwischen den Formstücken 1, 1' werden die verschweißten Teile dann von den Schweißbacken 5, 5' in eine Kühlvorrichtung überführt und dort bis zur Verfestigung der Schweißnaht gekühlt, wobei die Folien 3, 3' stets dafür sorgen, daß die Schweißnaht in ihrer gewünschten Form und Lage bleibt, bis ein Lösen derselben nach ihrer Verfestigung nicht mehr möglich ist. Dann können die Formstücke 1, 1' von den Folienteilen 3, 3' gelöst und der durch das Verschweißen gebildete Behälter seiner weiteren Bearbeitung zugeführt werden.

Die den Folien 3, 3' zugewandte Oberfläche der Formstücke 1, 1' ist zweckmäßigerweise mit einer anti-adhäsiven Beschichtung 2, 2' versehen, beispielsweise Polytetrafluoräthylen oder Polyimid. Dadurch wird ein Ankleben der Folienteile 3, 3' an den Formstücken 1, 1' während des Verschweißens und des nachfolgenden Kühlens verhindert.

Der Stift 4, auf den der Einsatz 6 aufgesetzt ist, verfügt über einen Kanal, der in das Innere des herzustellenden Folienbeutels verläuft. Dieser Kanal kann mit einer Vakuumpumpvorrichtung verbunden werden, um das Innere des herzustellenden Folienbeutels solange zu evakuieren, bis die Schweißnaht am Schluß des Kühlvorgangs vollständig verfestigt ist. Auf diese Weise wird gewährleistet, daß die beiden Folien 3, 3' auch nach dem Öffnen der Schweißbacken 5, 5' durch den auf der Außenseite des Beutels wirkenden atmosphärischen Druck im Bereich der Schweißnähte gegeneinander gedrückt werden, so daß ein Lösen der noch nicht ausgehärteten Schweißnaht ausgeschlossen wird.

Wenn der Einsatz 6 in Form eines Röhrchens vorliegt, entsteht in den Bereichen, in denen die beiden Folien 3, 3' und das Röhrchen zusammenstoßen, zu Beginn der Schweißung ein etwa dreieckiger Hohlraum 7, 7', der im Verlauf des Schweißens durch die entstehende Schmelze ausgefüllt werden muß, um die gewünschte Dichtigkeit zu erreichen. Um diesen Hohlraum möglichst klein zu halten, ist der in diesem Bereich den Folien 3, 3' zugekehrte Radius der Formstücke 1, 1' möglichst klein auszubilden, so daß die Folien 3, 3' dort zusammen und in Richtung auf das Röhrchen gepreßt werden.

In Fällen jedoch, in denen nicht ein röhrchenförmiger Einsatz verwendet wird, sondern ein Einsatz mit einem Querschnitt, durch den die Bildung eines solchen dreieckigen Hohlraums 7, 7' weitestgehend vermieden wird, oder in Fällen, in denen beispielsweise aufgrund einer größeren Dicke der Folien 3, 3' der entstehende dreieckige Hohlraum 7, 7' leichter ausgefüllt werden kann, ist es möglich, Formstücke 1, 1' zu verwenden, die auf einfache Weise durch Abbiegen eines Blechteils hergestellt sind. Bei höheren Anforderungen erweist es sich als zweckmäßig, ein aus Blech hergestelltes Formstück entweder nach dem Biegevorgang in einem Gesenk entsprechend zu kalibrieren oder es aus mehreren Einzelteilen durch Löten oder Schweißen zu der gewünschten Form zusammenzusetzen, oder aber ein Formstück hoher Genauigkeit durch Fräsen oder Drehen herzustellen.

**Patentansprüche**

1. Verfahren zum Einschweißen eines Einsatzes (6), insbesondere eines Anschlußröhrchens, zwischen zwei Folien (3,3') eines aus Kunststoffolie herzustellenden Behälters, insbesondere eines Flüssigkeitsbeutels, mit folgenden Verfahrensschritten:

 der Einsatz (6) wird zwischen die Folien (3,3') eingefügt und diese werden zwischen zwei wärmeleitfähigen Formstücken (1,1'), deren Gestalt an die Außenkontur des einzuschweißenden Einsatzes (6) und die sich anschließenden Nahtbereiche der Schweißnaht angepaßt ist, miteinander verschweißt, indem die Formstücke (1, 1') mit jeweils zugeordneten geheizten Schweißbacken (5,5') in Kontakt gebracht und unter Druck beheizt werden,

 sodann werden die verschweißten Teile zwischen den Formstücken (1,1') verbleibend zusammen mit diesen von den Schweißbacken (5,5') entfernt und in eine Kühlvorrichtung überführt und dort bis zu Verfestigung der Schweißnaht gekühlt.

2. Verfahren nach Anspruch 1, dadurch gekennzeichnet, daß der Einsatz (6) auf einen Stift (4) aufgesteckt zwischen die Folien (3, 3') eingefügt wird, und daß das Innere des herzustellenden Behälters durch einen Kanal in dem Stift evakuiert wird.

3. Verfahren nach Anspruch 2, dadurch gekennzeichnet, daß das Vakuum bis zum Schluß des Kühlvorgangs und der Verfestigung der Schweißnaht beibehalten wird.

4. Verfahren nach einem der Ansprüche 1 bis 3, dadurch gekennzeichnet, daß der einzuschweißende Einsatz (6) eine im Querschnitt rautenähnliche Außenkontur mit einander gegenüberliegenden, spitz zulaufenden Endteilen aufweist und so zwischen die beiden Folien (3, 3') eingeführt wird, daß die spitz zulaufenden Endteile des Einsatzes (6) am Übergang zu den sich anschließenden Nahtbereichen in den Verlauf der Naht zwischen den beiden Folien (3, 3') übergeht.

**Fig.1**

**Fig. 2**